# EUROPÄISCHE PATENTSCHRIFT

(11) **EP 0 573 698 B1**
(45) Veröffentlichungstag und Bekanntmachung des Hinweises auf die Patenterteilung: **27.09.1995**
(21) Anmeldenummer: 92121542.2
(22) Anmeldetag: 18.12.1992
(51) Int. Cl.: F16H 55/36, F16H 55/48

(54) **Riemenscheibe**
Belt pulley
Poulie à courroie

(30) Priorität: 11.06.1992 DE 4219108
(43) Veröffentlichungstag der Anmeldung: 15.12.1993
(73) Patentinhaber: Firma Carl Freudenberg, 69469 Weinheim (DE)
(72) Erfinder: Gesenhues, Bernhard, Dr., W-6943 Birkenau (DE); Weinlein, Roger, W-6806 Viernheim (DE)

(56) Entgegenhaltungen:
- WO-A-80/01404
- WO-A-88/04001
- DD-A- 250 162
- FR-A- 2 345 632
- FR-A- 2 614 382

## Beschreibung

Die Erfindung betrifft eine Riemenscheibe, umfassend zumindest einen Riemenscheibenkörper mit einer Riemenlauffläche, die in axialer Richtung durch zumindest eine separat montierbare Bordscheibe begrenzt ist, wobei die Bordscheibe die Riemenlauffläche in radialer Richtung überragt, konzentrisch und unverdrehbar zu dieser angeordnet ist und gemeinsam mit der Riemenlauffläche um eine Drehachse bewegbar ist.

Eine solche Riemenscheibe ist allgemein bekannt (siehe zum Beispiel FR-A-2 614 382) und gelangt beispielsweise als Übertragungselement zum Antrieb von Nebenaggregaten im Bereich von Verbrennungskraftmaschinen zur Anwendung. Dabei ist allerdings zu beachten, daß die Montage der zur Anwendung gelangenden Bordscheiben an den Riemenscheibenkörpern in fertigungstechnischer Hinsicht wenig befriedigend ist. Zumeist werden die Bordscheiben an den Riemenscheibenkörper angeschraubt oder auf diesen aufgeschrumpft.

Der Erfindung liegt die Aufgabe zugrunde, eine Riemenscheibe der eingangs genannten Art derart weiterzuentwickeln, daß die Bordscheibe einfach und kostengünstig herstellbar ist und die Montage der Bordscheibe am Riemenscheibenkörper vereinfacht wird.

Diese Aufgabe wird durch Anspruch 1 gelöst. Auf vorteilhafte Ausgestaltungen nehmen die Unteransprüche Bezug.

Bei der erfindungsgemäßen Riemenscheibe ist es vorgesehen, daß der Riemenscheibenkörper mit in axialer Richtung offenen Ausnehmungen und im Bereich der Ausnehmungen mit Hinterschneidungen versehen ist und daß die Bordscheibe im Bereich ihres Innendurchmessers entsprechend den Ausnehmungen verteilte Zungen aufweist, die während der bestimmungsgemäßen Verwendung mit den Hinterschneidungen in Eingriff sind. Hierbei ist von Vorteil, daß die Riemenscheibe einen teilearmen Aufbau aufweist, was im Hinblick auf ein geringes Gewicht und eventuell auftretende Unwuchterscheinungen von Vorteil ist. Befestigungshilfsmittel wie beispielsweise Sicherungsringe gegen axiale Verschiebung oder Schrauben zur Befestigung der Bordscheibe am Riemenscheibenkörper sind dadurch entbehrlich.

Die Bordscheibe kann beispielsweise aus einem umformbaren metallischen Werkstoff gebildet sein, wobei die Zungen durch umbördeln mit den Hinterschneidungen in Eingriff bringbar sind. Diese Ausgestaltung bedingt einerseits eine Verdrehsicherung in Umfangsrichtung und gleichzeitig andererseits eine Sicherung der Bordscheibe in axialer Richtung.

Nach einer anderen Ausgestaltung kann die Bordscheibe aus einem federelastischen Werkstoff gebildet sein, wobei die Zungen als Schnappvorrichtungen ausgebildet und in die Hinterschneidungen einschnappbar sind. Eine derartige Ausgestaltung bedingt eine besonders einfache Montage, da diese bei Einfügen der Zungen in die Ausnehmungen selbsttätig einrasten. Während der bestimmungsgemäßen Verwendung der Riemenscheibe legen sich die Zungen fliehkraftbedingt an die Hinterschneidungen der Ausnehmungen an und gewährleisten eine zuverlässige Festlegung der Bordscheibe sowohl in Umfangsrichtung bezogen auf den Riemenscheibenkörper als auch entgegen der Montagerichtung. Die Bordscheibe kann beispielsweise aus einem Federstahl oder einem Kunststoff, insbesondere einem temperatdurbeständigen, verschleißfesten Material, z. B. Duroplast, glasfaserverstärkt, gebildet sein.

Zweckmäßigerweise sind zumindest drei gleichmäßig in Umfangsrichtung verteilte Ausnehmungen und Zungen vorzusehen. In Abhängigkeit von der Größe der Riemenscheibe kann die Anzahl von Ausnehmungen und Zungen davon abweichen. Die Anzahl ist so zu wählen, daß einerseits eine sichere Festlegung und verkantungsfreie Zuordnung der Bordscheibe am Riemenscheibenkörper gewährleistet ist und andererseits die Herstellung der Bordscheibe sowie deren Montage möglichst einfach erfolgen kann.

Im Hinblick auf die Vermeidung von Kerbspannungen können die Durchbrechungen im wesentlichen U-förmig ausgebildet sein. Eine derart ausgebildete Bordscheibe bewirkt gute Gebrauchseigenschaften der Riemenscheibe während einer langen Gebrauchsdauer.

In Abhängigkeit von den jeweiligen Gegebenheiten des Anwendungsfalls und der Ausgestaltung der Bordscheibe können die Durchbrechungen eine radiale Tiefe aufweisen, die bevorzugt höchstens 0,5 mal so groß ist, wie die radiale Dicke der Bordscheibe. Durch diese Ausgestaltung wird eine ausreichend große Stabilität der Bordscheibe sichergestellt.

Gemäß einer vorteilhaften Ausgestaltung ist es vorgesehen, daß der Riemenscheibenkörper aus einem polymeren Werkstoff gebildet ist. Diese Ausgestaltung ist vorteilhaft im Hinblick auf einen geringen Fertigungsaufwand bei gleichzeitig geringer Masse. Bei der Werkstoffauswahl ist Selbstverständlich darauf zu achten, daß die Hinterschneidung auch bei Verwendung einer metallischen Bordscheibe die auftretenden Axialkräfte während einer langen Gebrauchsdauer aufnehmen kann.

Hinsichtlich einer wirtschaftlich günstigen Herstellbarkeit kann bei Verwendung eines Riemenscheibenkörpers aus polymerem Werkstoff die der separat zu montierenden Bordscheibe axial benachbarte Bordscheibe einstückig mit dem Riemenscheibenkörper ausgebildet sein. Die Montage der gesamten Riemenscheibe kann dadurch weiter vereinfacht werden.

Die erfindungsgemäße Riemenscheibe wird nachfolgend anhand der als Anlage beigefügten Zeichnungen weiter verdeutlicht. Es zeigen:
Figur 1 ein Ausführungsbeispiel einer erfindungsgemäßen Riemenscheibe in geschnittener Darstellung,
Figur 2 die Vorderansicht der in Figur 1 zur Anwendung gelangenden, separat zu montierenden Bordscheibe und
Figur 3 ein alternatives Ausführungsbeispiel, bei dem die Bordscheibe in die Ausnehmung des Riemenscheibenkörpers eingeschnappt ist.

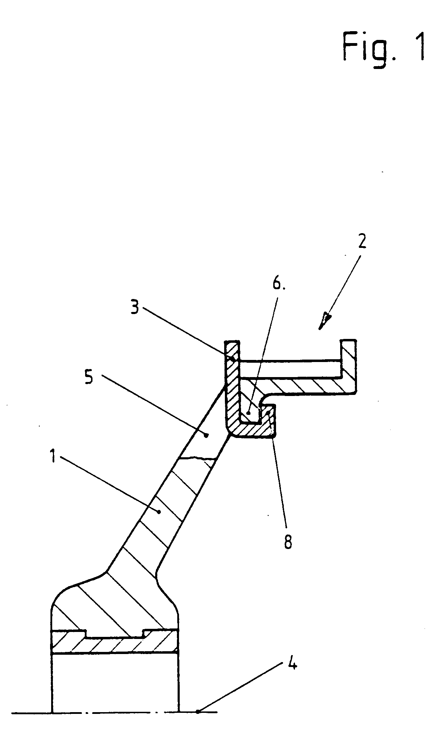

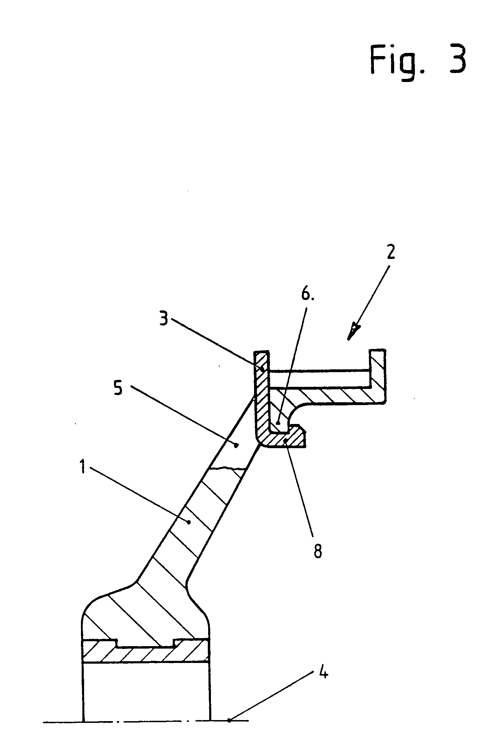

In den Figuren 1 und 3 ist jeweils ein Ausführungsbeispiel einer Riemenscheibe gezeigt, wobei der Riemenscheibenkörper 1 aus einem polymeren Werkstoff besteht und eine einstückig angeformte Bordscheibe aufweist. Die Riemenlauffläche 2 ist auf der der einstückig angeformten Bordscheibe in axialer Richtung gegenüberliegenden Seite durch eine separat montierbare Bordscheibe 3 gebildet, die in Figur 1 aus einem umformbaren metallischen Werkstoff besteht. Die Zungen 8 der Bordscheibe sind durch Umbördeln mit den Hinterschneidungen 6 in Eingriff gebracht.

Demgegenüber ist in Figur 3 eine Bordscheibe 3 gezeigt, deren Zungen 8 als Schnappvorrichtung ausgebildet und in die Hinterschneidungen 6 einschnappbar sind. Im montierten Zustand liegen die Zungen 8 selbst bei stillstehender Riemenscheibe unter radialer Vorspannung am Riemenscheibenkörper 1 an. Während der bestimmungsgemäßen Verwendung wird diese Vorspannung der Zungen 8 fliehkraftbedingt weiter verstärkt, so daß eine zuverlässige Fixierung der Bordscheibe 3 sowohl in Umfangsrichtung als auch in axialer Richtung gewährleistet ist. Die Bordscheiben 3 überragen die Riemenlauffläche 2 und den aufgelegten Riemen in radialer Richtung, so daß Axialverlagerungen des Riemens während der bestimmungsgemäßen Verwendung ausgeschlossen sind.

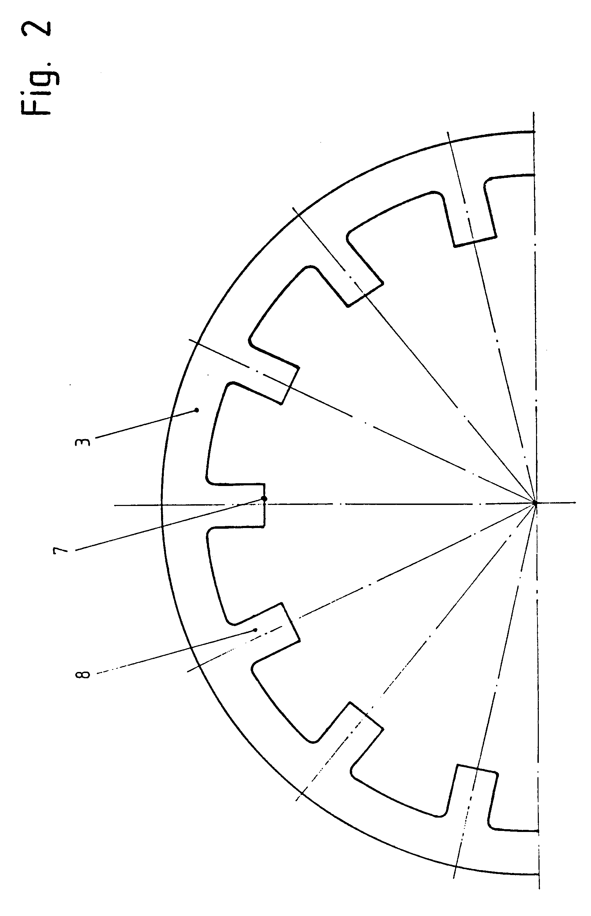

In Figur 2 ist die Bordscheibe 3 dargestellt, die in Ausführungsbeispiel Figur 1 zur Anwendung gelangt. Im Bereich des Innendurchmessers 7 der Bordscheibe 3 sind Zungen 8 angeordnet, die die Hinterschneidung 6 des Riemenscheibenkörpers 1 hintergreifen.

Der Riemenscheibenkörper 1 besteht in den Ausführungsbeispielen gemäß der Figuren 1 und 3 aus einem polymeren Werkstoff wodurch eine einfache, kostengünstige Herstellbarkeit gewährleisten ist und die montierte Riemenscheibe eine vergleichsweise geringe Trägheitsmasse aufweist. Sowohl die Gebrauchseigenschaften als auch die günstigen Eigenschaften in fertigungstechnischer und wirtschaftlicher Hinsicht sind bei der erfindungsgemäßen Riemenscheibe von hervorzuhebender Bedeutung.

## Patentansprüche

1. Riemenscheibe, umfassend zumindest einen Riemenscheibenkörper (1) mit einer Riemenlauffläche (2), die in axialer Richtung durch zumindest eine separat montierbare Bordscheibe (3) begrenzt ist, wobei die Bordscheibe (3) die Riemenlauffläche (2) in radialer Richtung überragt, konzentrisch und unverdrehbar zu dieser angeordnet ist und gemeinsam mit der Riemenlauffläche (2) um eine Drehachse (4) bewegbar ist, dadurch gekennzeichnet, daß der Riemenscheibenkörper (1) mit zumindest zwei in axialer Richtung offenen Ausnehmungen (5) und im Bereich der Ausnehmungen (5) mit Hinterschneidungen (6) versehen ist und daß die Bordscheibe (3) im Bereich ihres Innendurchmessers (7) entsprechend den Ausnehmungen (5) verteilte Zungen (8) aufweist, die während der bestimmungsgemäßen Verwendung mit den Hinterschneidungen (6) in Eingriff sind.

2. Riemenscheibe nach Anspruch 1, dadurch gekennzeichnet, daß die Bordscheibe (3) aus einem umformbaren metallischen Werkstoff gebildet ist und daß die Zungen (8) durch Umbördeln mit den Hinterschneidungen (6) in Eingriff bringbar sind.

3. Riemenscheibe nach Anspruch 1, dadurch gekennzeichnet, daß die Bordscheibe (3) aus einem federelastischen Werkstoff gebildet ist, daß die Zungen (8) als Schnappvorrichtung ausgebildet und in die Hinterschneidungen (6) einschnappbar sind.

4. Riemenscheibe nach Anspruch 3, dadurch gekennzeichnet, daß die Zungen (8) die Hinterschneidungen (6) während des Betriebs fliehkraftbedingt umschließen.

5. Riemenscheibe nach Anspruch 1 bis 4, dadurch gekennzeichnet, daß zumindest drei gleichmäßig in Umfangsrichtung verteilte Ausnehmungen (5) und Zungen (8) vorgesehen sind.

6. Riemenscheibe nach Anspruch 1 bis 5, dadurch gekennzeichnet, daß die Zungen (8) durch Durchbrechungen der Bordscheibe (3) gebildet sind.

7. Riemenscheibe nach Anspruch 6, dadurch gekennzeichnet, daß die Durchbrechungen im wesentlichen U-förmig ausgebildet sind.

8. Riemenscheibe nach Anspruch 6 bis 7, dadurch gekennzeichnet, daß die Durchbrechungen eine radiale Tiefe aufweisen, höchstens 0,5 mal so groß ist, wie die radiale Dicke der Bordscheibe (3).

9. Riemenscheibe nach Anspruch 1 bis 8, dadurch gekennzeichnet, daß der Riemenscheibenkörper (1) aus einem polymeren Werkstoff besteht.

10. Riemenscheibe nach Anspruch 1 bis 9, dadurch gekennzeichnet, daß die der separat zu montierenden Bordscheibe (3) axial benachbarte Bordscheibe einstückig mit dem Riemenscheibenkörper (1) ausgebildet ist.

## Claims

1. A belt pulley, comprising at least one belt-pulley body (1) with a belt running surface (2) which is limited in the axial direction by at least one separately mountable flanged disc (3), the flanged disc (3) projecting beyond the belt running surface (2) in the radial direction, being arranged concentrically and non-rotatably relative to the latter and being movable jointly with the belt running surface (2) about an axis of rotation (4), characterized in that the belt-pulley body (1) is provided with at least two recesses (5) open in the axial direction and with undercuts (6) in the region of the recesses (5), and in that the flanged disc (3) in the region of its inside diameter (7) has tongues (8) which are distributed according to the recesses (5) and which are in engagement with the undercuts (6) during the intended use.

2. A belt pulley according to claim 1, characterized in that the flanged disc (3) is formed from a deformable metallic material, and in that the tongues (8) can be brought into engagement with the undercuts (6) by crimping.

3. A belt pulley according to claim 1, characterized in that the flanged disc (3) is formed from a resilient material, and in that the tongues (8) are designed as a snap device and can be snapped into the undercuts (6).

4. A belt pulley according to claim 3, characterized in that, during operation, the tongues (8) enclose the undercuts (6) as a result of centrifugal force.

5. A belt pulley according to any of claims 1 to 4, characterized in that at least three recesses (5) and tongues (8) are provided distributed uniformly in the circumferential direction.

6. A belt pulley according to any of claims 1 to 5, characterized in that the tongues (8) are formed by perforations of the flanged disc (3).

7. A belt pulley according to claim 6, characterized in that the perforations are of essentially U-shaped design.

8. A belt pulley according to either of claims 6 and 7, characterized in that the perforations have a radial depth which is at most 0.5 times as large as the radial thickness of the flanged disc (3).

9. A belt pulley according to any of claims 1 to 8, characterized in that the belt-pulley body (1) consists of a polymeric material.

10. A belt pulley according to any of claims 1 to 9, characterized in that the flanged disc axially adjacent to the flanged disc (3) to be separately mounted is made in one piece with the belt-pulley body (1).

## Revendications

1. Poulie à courroie, comprenant au moins un corps de poulie à courroie (1) comportant une surface de roulement (2) pour une courroie, qui est limitée, dans la direction axiale, par au moins un disque de bordure (3) pouvant être monté séparément, le disque de bordure (3) dépassant la surface de roulement (2) pour une courroie dans la direction radiale, étant disposé de manière concentrique et fixe par rapport à celle-ci et pouvant être mis en rotation de manière commune avec la surface de roulement (2) pour une courroie autour d'un axe de rotation (4), caractérisée en ce que le corps de poulie à courroie (1) comporte au moins deux évidements (5) ouverts dans la direction axiale et est pourvu, dans la région des évidements (5), de contre-dépouilles (6), et en ce que le disque de bordure (3) est pourvu, dans la région de son diamètre intérieur (7), de langues (8) réparties de manière correspondante aux évidements (5) et qui sont en prise avec les contre-dépouilles (6) pendant l'utilisation conforme aux prescriptions.

2. Poulie à courroie selon la revendication 1, caractérisée en ce que le disque de bordure (3) est fait d'un matériau métallique déformable et en ce que les langues (8) peuvent être mises en prise avec les contre-dépouilles (6) par bridage.

3. Poulie à courroie selon la revendication 1, caractérisée en ce que le disque de bordure (3) est fait d'une matière élastique, en ce que les langues (8) sont formées par des éléments à déclics et peuvent être enclenchées dans les contre-dépouilles (6).

4. Poulie à courroie selon la revendication 3, caractérisée en ce que les langues (8) enserrent les contre-dépouilles (6) sous l'effet de la force centrifuge pendant la mise en service.

5. Poulie à courroie selon les revendications 1 à 4, caractérisée en ce que l'on prévoit au moins trois évidements (5) et trois langues (8) répartis uniformément dans la direction circonférentielle.

6. Poulie à courroie selon les revendications 1 à 5, caractérisée en ce que les langues (8) sont formées par des découpures du disque de bordure (3).

7. Poulie à courroie selon la revendication 6, caractérisée en ce que les découpures ont sensiblement une forme en U.

8. Poulie à courroie selon les revendications 6 àt 7, caractérisée en ce que les découpures ont une profondeur radiale qui est égale, au maximum, à 0,5 fois l'épaisseur radiale du disque de bordure (3).

9. Poulie à courroie selon les revendications 1 à 8, caractérisée en ce que le corps de poulie à courroie (1) est fait d'une matière polymère.

10. Poulie à courroie selon les revendications 1 à 9, caractérisée en ce que le disque de bordure adjacent, dans le sens axial, au disque de bordure (3) à monter séparément est formé d'un seul morceau avec le corps de poulie à courroie (1).
